# EUROPEAN PATENT APPLICATION

(11) **EP 2 530 939 A2**
(43) Date of publication of application: **05.12.2012**
(21) Application number: 12165226.7
(22) Date of filing: 23.04.2012
(51) Int. Cl.: H04N 13/00

(54) **3D-image conversion apparatus, method for adjustment depth information of the same, and storage medium thereof**

(30) Priority: 01.06.2011 KR 20110052903
(71) Applicant: Samsung Electronics Co., Ltd., Suwon-si, Gyeonggi-do, 443-742 (KR)
(72) Inventor: Kwon, Oh-yun, Seoul (KR); Heo, Hye-hun, Gyeonggi-do (KR)
(74) Representative: Clark, David James

(57) **Abstract**

A 3D-image conversion apparatus, a method of adjusting depth information of the same, and a storage method thereof are provided. The three-dimensional (3D) image conversion apparatus includes a depth information generator which generates depth information with regard to an input image; an object detector which detects an object having parallax exceeding a preset range in a left-eye image and a right-eye image corresponding to the input image based on the generated depth information; a depth information adjuster which adjusts depth information of the object by adjusting the parallax of the detected object to be within a preset range; and a rendering unit which renders the input image according to the adjusted depth information. With this, a viewer's fatigue can be minimized in the case of converting a 2D image into a 3D image.

## Description

### BACKGROUND

### Field

Apparatuses and methods consistent with the exemplary embodiments relate to a 3D-image conversion apparatus, a method of adjusting depth information of the same, and a computer-readable recording medium thereof, and more particularly, to a 3D-image conversion apparatus capable of converting a 2D image into a 3D image, a method of adjusting depth information of the same, and a computer-readable recording medium thereof.

### Description of the Related Art

If an excessive depth value is applied for enhancing a 3D effect while converting a 2D image into a 3D image, there arises a problem that excessive negative or positive parallax increases eyestrain of a viewer and causes inconvenience to a viewer for viewing.

### SUMMARY

Accordingly, one or more exemplary embodiments provide a 3D-image conversion apparatus capable of minimizing eyestrain and improving a viewing experience of a 3D image, a method of adjusting depth information of the same, and a computer-readable recording medium thereof.

The foregoing and/or other aspects may be achieved by providing a three-dimensional (3D) image conversion apparatus including: a depth information generator which generates depth information with regard to an input image; an object detector which detects an object having parallax exceeding a preset range in left-eye images and right-eye images corresponding to the input image based on the generated depth information; a depth information adjuster which adjusts depth information of the object by adjusting the parallax of the detected object to be within a preset range; and a rendering unit which renders the input image according to the adjusted depth information.

The apparatus may further include: a user interface (UI) generator which generates a first UI for indicating the detected object, and a second UI for setting up a parallax adjusting range of the detected object.

The apparatus may further include a display unit; and a user input unit, wherein the depth information adjuster adjusts the parallax of the object according to a certain parallax adjusting range based on a user's selection input through the second UI.

The depth information adjuster may analyze metadata about the input image in order to adjust the generated depth information to be within a predetermined range based on the analyzed input image metadata.

The metadata may include at least one of genre information and viewing age information of contents corresponding to the input image.

Another aspect may be achieved by providing a three-dimensional (3D) image conversion apparatus including: a depth information generator which generates depth information with regard to an input image including a plurality of frames; a depth information difference calculator which calculates difference in depth information about between a first object in a first frame and a second object in a second frame among the plurality of frames based on the generated depth information; a depth information adjuster which adjusts the depth information about the second object to be within a preset range if the result calculated by the depth information difference calculator exceeds a preset critical value; and a rendering unit which renders the input image according to the adjusted depth information.

The first object and the second object are recognized as one object to be within the plurality of frames by a user.

The apparatus may further include: a user interface (UI) generator which generates a third UI for showing the difference in the depth information of between the first object and the second object, calculated by the depth information difference calculator.

The third UI may include a fourth UI for setting up a depth information adjusting range with regard to the second object.

The apparatus may further include a display unit; and a user input unit, wherein the depth information adjuster adjusts the depth information of the second object according to a certain depth information adjusting range based on a user's selection input through the fourth UI.

Still another aspect may be achieved by providing a depth information adjusting method of a three-dimensional (3D) image conversion apparatus, the method including: generating depth information with regard to an input image; detecting an object having parallax exceeding a preset range in left-eye images and right-eye images corresponding to the input image based on the generated depth information; adjusting depth information of the object by adjusting the parallax of the detected object to be within a preset range; and rendering the input image according to the adjusted depth information.

The method may further include: generating and displaying a first UI for indicating the detected object, and a second UI for setting up a parallax adjusting range of the detected object.

The method may further include receiving a certain parallax adjusting range based on a user's selection through the second UI, wherein the adjusting the depth information includes adjusting the parallax of the object according to the received certain parallax adjusting range.

The adjusting the depth information may further include using metadata about the input image to adjust the generated depth information to be within a predetermined range.

The metadata may include at least one of genre information and viewing age information of contents corresponding to the input image.

Still another aspect may be achieved by providing a depth information adjusting method of a three-dimensional (3D) image conversion apparatus, the method including: generating depth information with regard to an input image including a plurality of frames; calculating difference in depth information about between a first object in a first frame and a second object in a second frame among the plurality of frames based on the generated depth information; adjusting the depth information about the second object to be within a preset range if the result calculated by the depth information difference calculator exceeds a preset critical value; and rendering the input image according to the adjusted depth information.

The first object and the second object are recognized as one object to be within the plurality of frames by a user.

The method may further include: generating and displaying a third UI for showing the difference in the depth information of between the first object and the second object, calculated by the depth information difference calculator.

The third UI may include a fourth UI for setting up a depth information adjusting range with regard to the second object.

The method may further include receiving a certain depth information adjusting range based on a user's selection through the fourth UI, wherein the adjusting the depth information adjusts the depth information of the second object according to the received certain depth information adjusting range.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a control block diagram showing an apparatus for 3D-image conversion according to an exemplary embodiment;

FIG. 2 is a control block diagram showing an apparatus for 3D-image conversion according to an exemplary embodiment;

FIG. 3 illustrates negative parallax and positive parallax;

FIG. 4 shows an example of a method of adjusting depth information in the 3D-image conversion apparatus of FIG. 2;

FIG. 5 is a flowchart of a depth information adjusting method in the 3D-image conversion apparatus of FIG. 1; and

FIG. 6 is a flowchart of a depth information adjusting method in the 3D-image conversion apparatus of FIG. 2.

### DETAILED DESCRIPTION OF THE EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

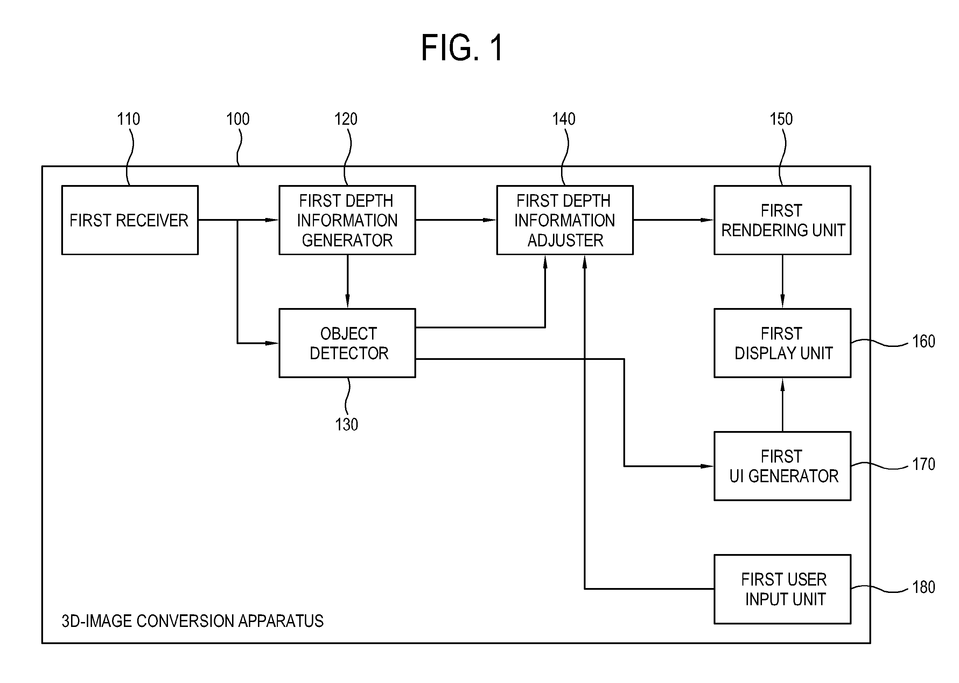

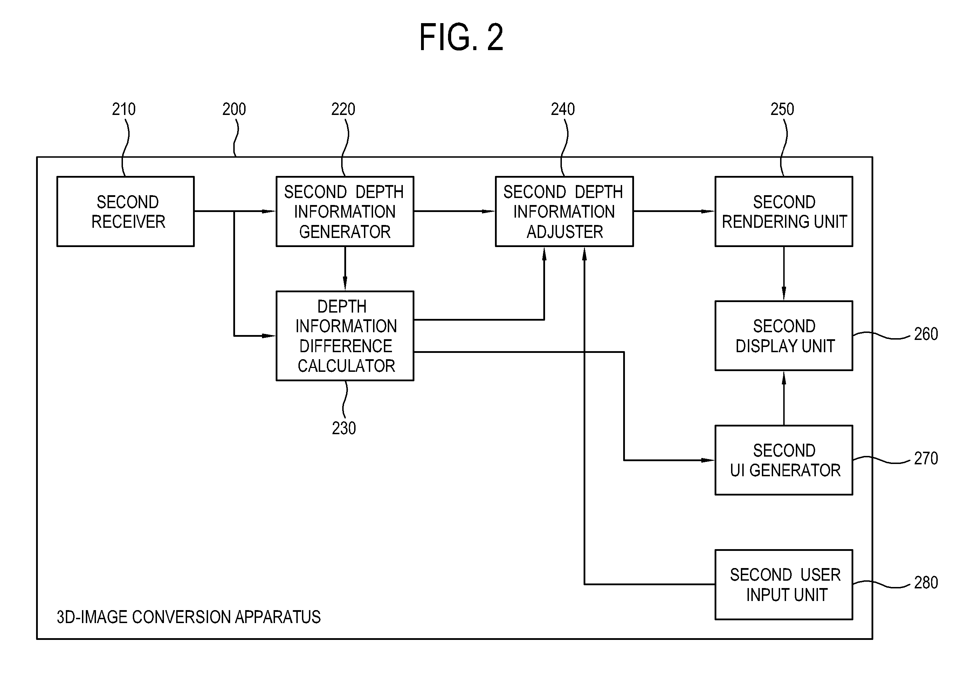

FIGS. 1 and 2 are control block diagrams of a 3D-image conversion apparatus according to exemplary embodiments.

A 3D-image conversion apparatus 100, 200 is an electronic apparatus capable of receiving a 2D image or monocular image from an external source providing apparatus (not shown) and converting the received 2D image into a 3D image or binocular image, and for example, includes a display apparatus, particularly a general personal computer (PC), television or the like. The 3D-image conversion apparatus 100, 200 according to an exemplary embodiment generates depth information by using a predetermined depth estimation algorithm or theory with regard to a received input image and adjusts the generated depth information reflecting a user's selection, and converts the input image into a 3D image based on the adjusted depth information. After converting a 2D image received from the source providing apparatus (not shown) into a 3D image, the 3D-image conversion apparatus 100, 200 may stereoscopically display the converted 3D image or transmit the converted 3D image to an external content reproducing apparatus (not shown) capable of reproducing the 3D image, for example, a television (TV), a personal computer (PC), a smart phone, a smart pad, a portable multimedia player (PMP), an MP3 player, etc.

In a network according to an exemplary embodiment, there is no limit to a communication method of the network, such as wired and/or wireless communication methods or the like as long as it is used in data communication for transmitting a 2D image and/or a 3D image, and the data communication includes any known communication method.

Referring to FIG. 1, the 3D-image conversion apparatus 100 includes a first receiver 110, a first depth information generator 120, an object detector 130, a first depth information adjuster 140, a first rendering unit 150, a first display unit 160, a first UI generator 170, and a first user input unit 180.

Referring to FIG. 2, the 3D-image conversion apparatus 100 includes a second receiver 210, a second depth information generator 220, a depth information difference calculator 230, a second depth information adjuster 240, a second rendering unit 250, a second display unit 260, a second UI generator 270, and a second user input unit 280.

The first and second receivers 110 and 210 may receive an input image from an external source providing apparatus (not shown). The input image includes a 2D image or a monocular image. A 3D image is based on a viewer's binocular parallax, and includes a plurality of left-eye frames and a plurality of right-eye frames. Among the plurality of left-eye frames and the plurality of right-eye frames, a pair of left-eye and right-eye frames may be each converted from at least one corresponding frame of the plurality of frames in the input image.

The first and second receivers 110 and 210 may receive a 2D image from an external source providing apparatus (not shown) through a predetermined network (not shown). For example, as a network server the source providing apparatus stores a 2D image and transmits the 2D image to the 3D-image conversion apparatus 100, 200 as requested by the 3D-image conversion apparatus 100, 200.

According to another exemplary embodiment, the receiver 110 and 210 may receive a 2D image from the source providing apparatus (not shown) through not the network but another data transfer means. For example, the source providing apparatus (not shown) may be an apparatus provided with a storage means such as a hard disk, a flash memory, etc. for storing the 2D image, which can be locally connected to the 3D-image conversion apparatus 100, 200 and transmit the 2D image to the 3D-image conversion apparatus 100, 200 as requested by the 3D-image conversion apparatus 100, 200. In this case, as long as data of a 2D image is transmitted, there is no limit to a local connection method between the source providing apparatus (not shown) and the first and second receivers 110 and 210, and the local connection method may for example include a universal serial bus (USB), etc.

The first and second depth information generators 120 and 220 generate depth information about an input image containing a plurality of frames. According to an exemplary embodiment, the first and second depth information generators 120 and 220 may generate the depth information based on a generally known depth estimation algorithm. According to another exemplary embodiment, the first and second depth information generators 120 and 220 may receive depth setting information from an external source and generate depth information about the input image based on the depth setting information. At this time, the depth setting information may include at least one of frame selection information, object selection information depth value range information with respect to the input image containing the plurality of setting information.

The object detector 130 may detect an object having parallax exceeding a preset range within the left-eye and right-eye images corresponding to the input image based on the depth information generated by the first depth information generator 120.

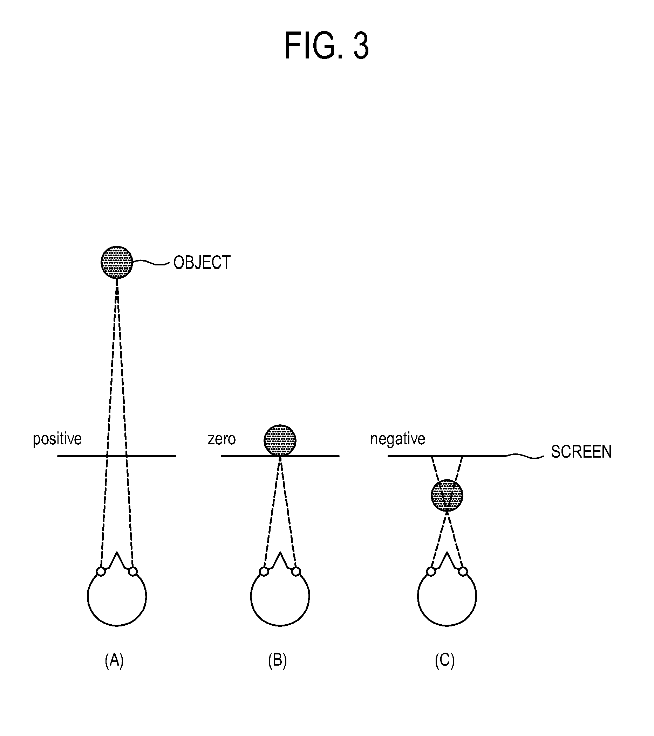

The first depth information adjuster 140 adjusts the parallax of the object detected by the object detector 130 to be within the preset range, and thus adjusts the depth information of the object. The object detector 130 and the first depth information adjuster 140 will be described in more detail with reference to FIG. 3.

The depth information difference calculator 230 calculates a difference between the depth information of the first object in the first frame and the depth information of the second object in the second frame among the plurality of frames based on the depth information generated by the second depth information generator 220.

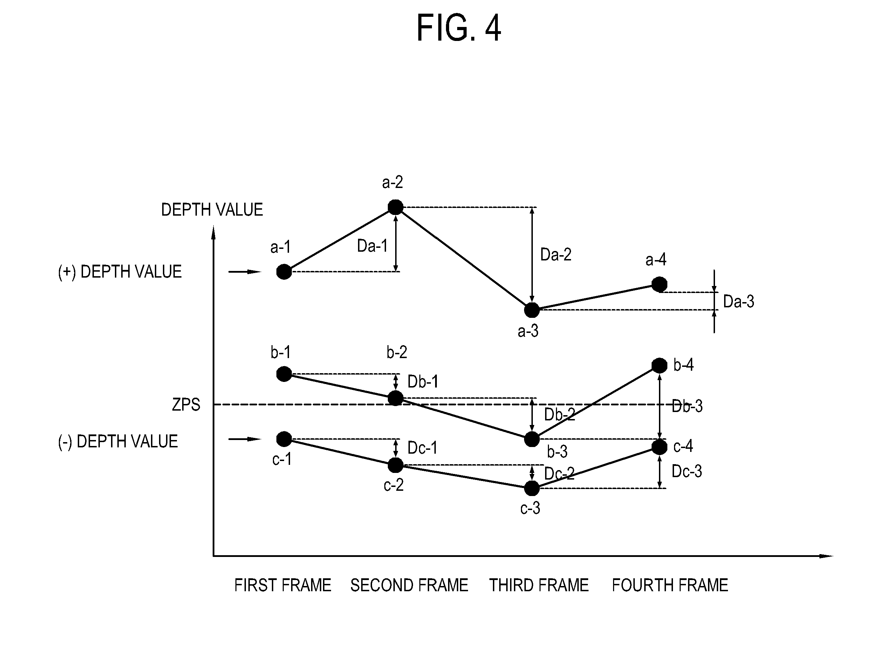

The second depth information adjuster 240 adjusts the depth information of the second object in the second frame to be within the preset range if the result from the depth information difference calculator 230 exceeds a preset critical value. In this regard, detailed descriptions will be referred to FIG. 4.

The first rendering unit 150 renders the input image based on the depth information adjusted by the first depth information adjuster 140, and the second rendering unit 250 renders the input image based on the depth information adjusted by the second depth information adjuster 240, thereby generating a 3D image.

The first and second display units 160 and 260 respectively display user interfaces generated by the first UI generator 170 and the second UI generator 270 to be described later. Also, the input image being converted by the image converter 20 may be displayed together with the UI. Further, a completely converted 3D image may be displayed. Without any limit, the first and second display units 160 and 260 may be achieved by various display types such as liquid crystal, plasma, a light-emitting diode, an organic light-emitting diode, a surface-conduction electron-emitter, a carbon nano-tube, a nano-crystal, etc.

The first UI generator 170 may generate a first UI for indicating the object detected by the object detector 130, and a second UI for setting up a parallax adjusting range of the detected object.

The second UI generator 270 may generate a third UI for displaying difference in the depth information between the depth information of the first object in the first frame and the depth information of the second object in the second frame calculated by the depth information difference calculator 230, and the second UI generator 270 may further generate a fourth UI for setting up the depth information adjusting range about the second object of the second frame.

The first and second user input units 180 and 280 are user interfaces for receiving a user's input, which receives a user's selection related to the function or operation of the 3D-image conversion apparatus 100, 200. The first and second user input units 180 and 280 may be provided with at least one key button, and may be achieved by a control panel or touch panel provided in the 3D-image conversion apparatus 100, 200. Also, the first and second user input units 180 and 280 may be achieved in the form of a remote controller, a keyboard, a mouse, a pointer etc., which is connected to the 3D-image conversion apparatus 100, 200 through a wire or wirelessly.

FIG. 3 illustrates negative parallax and positive parallax, with which the depth information adjusting method of the 3D-image converting apparatus 100 will be described.

As shown in FIG. 3, with respect to a screen, positive parallax A looks as if the object of the input image is focused behind the screen, zero parallax B looks as if the object is focused on the screen, and negative parallax C looks as if the object pops up from the screen. If the object of the input image has proper positive or negative parallax, a viewer can satisfactorily feel a 3D effect of a 3D image. However, if the object has positive or negative parallax exceeding a preset range, an excessive 3D effect may cause eyestrain of a viewer or a user and in severe cases may cause vomiting and dizziness.

Also, in the case of the object having the excessive positive or negative parallax, an image may look as if it is partially cropped from the screen. In this case, the positive or negative parallax of the object has to be adjusted.

Thus, the object detector 130 detects an object having parallax exceeding the preset range within the left-eye and right-eye images corresponding to the input image based on the depth information generated by the depth information generator 120. At this time, the first UI generator 170 generates the first UI for indicating the object detected by the object detector 130, and the second UI for setting up the parallax adjusting range of the detected object. The generated first and second UIs are displayed on the first display unit 160. The second UI may display a guideline for a proper parallax adjusting range of the object. Referring to the displayed guidelines, a user may select a proper parallax adjusting range. Through the second UI, a user's selection about the parallax adjusting range of the detected object is input using the first user input unit 180. The first depth information adjuster 140 adjusts the parallax of the object based on the parallax adjusting range based on the user's selection, and thus adjusts the depth information generated by the first depth information generator 120. The first rendering unit 150 renders the input image based on the depth information adjusted by the first depth information adjuster 140, thereby generating a 3D image.

According to another exemplary embodiment, the first depth information adjuster 140 may adjust the depth information generated by the first depth information generator 120 to be within a predetermined range based on metadata about the input image. The metadata may contain at least one type of information selected from genre information and viewing age information of the contents corresponding to the input image. The metadata may be embedded in the input image or received from a separate external source providing apparatus (not shown). The genre information of the content is information that indicates that the contents corresponding to the input image belong to at least one of action, sports and drama. According to the genre of the contents, the depth information generated by the first depth information generator 120 is adjusted to generate the depth information corresponding to the genre of the contents, thereby having an effect of giving a viewer a 3D effect corresponding to the genre of the contents. Also, the viewing age information of the contents contains proper viewing-age information about the input image. That is, there is physical difference in binocular parallax from a baby to an adult viewer. Also, if a baby or child views a 3D image having an excessive cubic effect, he or she may feel more eyestrain than an adult. Thus, according to the viewing age information of the contents (i.e., the viewing age of the viewer the contents are intended for), the depth information generated by the first depth information generator 120 is adjusted to generate depth information corresponding to a content viewing age, thereby having an effect on giving a viewer a 3D effect corresponding to the viewing age of the contents.

FIG. 4 shows an example of a method of adjusting depth information in the 3D-image conversion apparatus 200 of FIG. 2.

If there is a large difference in the depth information between preceding and following frames, a viewer may feel fatigue, and may thus feel concomitant symptoms such as dizziness and vomiting. According to the present exemplary embodiment, if the second depth information generator 220 generates depth information about an input image containing a plurality of frames, a difference in depth information between the depth information of a first object in a first frame and the depth information of a second object in a second frame is calculated based on the generated depth information. If the calculated difference exceeds a preset critical value, the depth information of the second object is adjusted to be within a preset range, thereby minimizing a user's fatigue. At this time, the depth information of the second object may be adjusted by receiving a user's selection.

Referring to FIG. 4, the first frame includes a first object a-1, a second object b-1 and a third object c-1. The second frame includes a fourth object a-2, a fifth object b-2 and a sixth object c-2. The third frame includes a seventh object a-3, an eighth object b-3 and a ninth object c-3. The fourth frame includes a tenth object a-4, an eleventh object b-4 and a twelfth object c-4. Here, the first object a-1, the fourth object a-2, the seventh object a-3 and the tenth object a-4 are recognized as one object within the plurality of frames by a viewer. Also, the second object b-1, the fifth object b-2, the eighth object b-3 and the eleventh object b-4 are recognized as one object within the plurality of frames by a viewer. Further, the third object c-1, the sixth object c-2, the ninth object c-3 and the twelfth object c-4 are recognized as one object within the plurality of frames by a viewer.

In the graph of FIG. 4, the Y axis indicates a level of the depth value, and the X axis indicates a variation of frames. Thus, each depth level of the first to twelfth objects is determined according to the height in the Y axis, which can be called a value generated by the second depth information generator 220.

The depth information difference calculator 230 calculates difference Da-1 in depth information between the first object a-1 in the first frame and the fourth object a-2 in the second frame, difference Da-2 in depth information between the fourth object a-2 in the second frame and the seventh object a-3 in the third frame, and difference Da-3 in depth information between the seventh object a-3 in the third frame and the tenth object a-4 in the forth frame.

Likewise, the depth information difference calculator 230 calculates differences Db-1, Db-2 and Db-3 between the second object b-1, the fifth object b-2, the eighth object b-3 and the eleventh object b-4, and calculates differences Dc-1, Dc-2 and Dc-3 between the third object c-1, the sixth object c-2, the ninth object c-3 and the twelfth object c-4.

As a result, it is determined that the differences Da-1, Da-2, Db-2 and Db-3 exceed a preset critical value but the other differences Da-3, Db-1, Dc-1, Dc-2 and Dc-3 do not exceed the preset critical value. According to the results of the depth information difference calculator 230, the third UI for showing the differences Da-1, Da-2, Db-2 and Db-3 exceeding the preset critical value is generated and displayed, and the fourth UI for setting the depth information adjusting ranges of the fourth object a-2, the seventh object a-3, the eighth object b-3 and the eleventh object b-4 is generated and displayed in order to adjust the displayed differences Da-1, Da-2, Db-2 and Db-3. Thus, if the depth information adjusting range based on a user's selection is input using the second user input unit 280 through the fourth UI, the second depth information adjuster 240 adjusts the depth information of the fourth object a-2, the seventh object a-3, the eighth object b-3 and the eleventh object b-4 according to the depth information adjusting range based on a user's selection. At this time, the fourth UI may also display information providing the guidelines of the depth information adjusting range. Accordingly, a user can select and input the depth information adjusting range with the displayed guidelines.

Using the adjusted depth information, the second rendering unit 250 renders the input image and thus generates a 3D image.

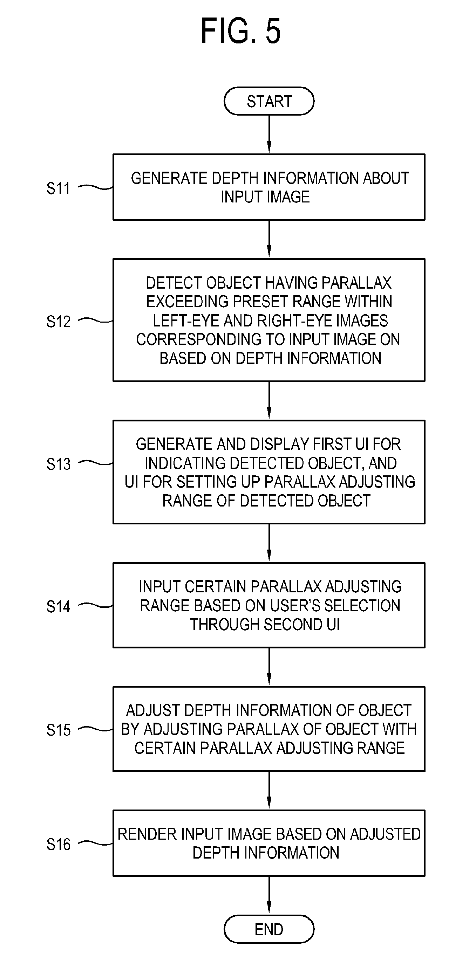

FIG. 5 is a flowchart of the depth information adjusting method in the 3D-image conversion apparatus according to the exemplary embodiment of FIG. 1.

As shown therein, if an input image is received from an external source providing apparatus (not shown), the 3D-image conversion apparatus generates depth information with regard to the received input image (S11). Based on the generated depth information, an object having parallax exceeding a preset range is detected in the left-eye and right-eye images corresponding to the input image (S12), and the first UI for indicating the detected object and the second UI for setting up the parallax adjusting range of the detected object are generated and displayed (S13). If a certain parallax adjusting range based on a user's selection is input through the second UI (S14), the parallax of the object is adjusted based on the certain parallax adjusting range to thereby adjust the depth information of the object (S15). The input image is rendered according to the adjusted depth information (S16), and thus a 3D image corresponding to the input image is generated. Also, the generated 3D image may be displayed on the 3D-image conversion apparatus 100. Further, the generated 3D image may be transmitted to an external content reproducing apparatus (not shown).

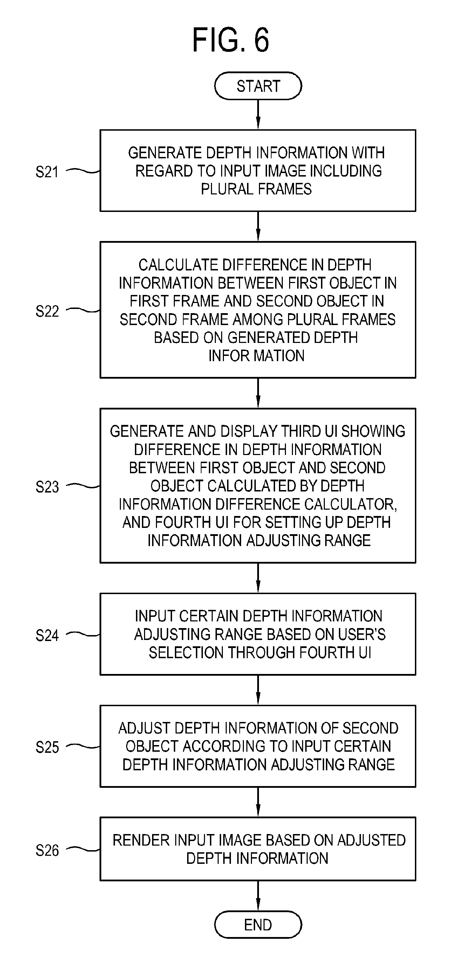

FIG. 6 is a flowchart of the depth information adjusting method in the 3D-image conversion apparatus according to the exemplary embodiment of FIG. 2.

As shown therein, an input image including a plurality of frames is received, and depth information is generated with regard to the received input image (S21). Based on the generated depth information, a difference in depth information between depth information of a first object in a first frame and depth information of a second object in a second frame among the plurality of frames is calculated (S22). It is determined whether the difference in dept information exceeds a preset critical value. The third UI for displaying the calculated difference in the depth information of between the first object and the second object and the fourth UI for setting up the depth information adjusting range are generated and displayed (S23). If a certain depth information adjusting range based on a user's selection is input through the fourth UI (S24), the depth information of the second object in the second frame is adjusted based on the certain input depth information adjusting range (S25). The input image is rendered according to the adjusted depth information (S26), and thus a 3D image corresponding to the input image is generated. Also, the generated 3D image may be displayed on the 3D-image conversion apparatus 200. Further, the generated 3D image may be transmitted to an external content reproducing apparatus (not shown).

The method implemented by the 3D-image conversion apparatus according to the exemplary embodiments may be achieved in the form of a program command executable by various computers and stored in a computer-readable recording medium. The computer-readable recording medium may include the single or combination of a program command, a data file, a data structure, etc. The program command recorded in the computer-readable recording medium may be specially designed and configured for the present exemplary embodiment, or publicly known and usable by a person having a skill in the art of computer software. For example, the computer-readable recording medium includes magnetic media such as a hard disk, a floppy disk and a magnetic tape; optical media such as a compact-disc read only memory (CD-ROM) and a digital versatile disc (DVD); magnet-optical media such as a floptical disk; and a hardware device specially configured to store and execute the program command, such as a ROM, a random access memory (RAM), a flash memory, etc. For example, the program command includes not only a machine code generated by a compiler but also a high-level language code executable by a computer using an interpreter or the like. The hardware device may be configured to operate as one or more software modules for implementing the method according to an exemplary embodiment, and vice versa. Each unit illustrated in FIGS. 1 and 2 (e.g., 110-180 and 210-280) may include a hardware processor for performing the operations thereof. In addition to or in the alternative, a central hardware control processor (e.g., a central processing unit (CPU)) or the like may be provided for controlling and performing one or more operations thereof.

As described above, there are provided a 3D-image conversion apparatus capable of minimizing eyestrain of a user, a method of adjusting depth information of the same, and a computer-readable recording medium thereof.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A three-dimensional (3D) image conversion apparatus comprising:
a depth information generator which generates depth information with regard to an input image;
an object detector which detects an object having the depth information exceeding a preset range;
a depth information adjuster which adjusts depth information to be within the preset range; and
a rendering unit which renders the input image according to the adjusted depth information of the object.

2. The apparatus according to claim 1,
wherein the object detector detects an object having parallax exceeding a preset range in a left-eye image and a right-eye image corresponding to the input image based on the generated depth information; and
wherein the depth information adjuster adjusts the parallax of the detected object to be within the preset range.

3. The apparatus according to claim 2, further comprising a user interface (UI) generator which generates a first UI which indicates the detected object, and a second UI which sets up a parallax adjusting range of the detected object.

4. The apparatus according to claim 3, further comprising:
a display unit; and
a user input unit,
wherein the depth information adjuster adjusts the parallax of the object according to a certain parallax adjusting range based on a user selection input through the second UI.

5. The apparatus according to claim 4,
wherein the depth information adjuster analyzes metadata about the input image and adjusts the generated depth information within a predetermined range based on the analyzed metadata.
wherein the metadata comprises at least one of genre information and viewing age information of contents corresponding to the input image.

6. The apparatus according to claim 1, further comprising a depth information difference calculator which calculates a difference in depth information between depth information of a first object in a first frame and depth information of a second object in a second frame among a plurality of frames of the input image based on the generated depth information;
wherein the depth information adjuster adjusts the depth information of the second object to be within a preset range, if the difference in depth information calculated by the depth information difference calculator exceeds a preset critical value.

7. The apparatus according to claim 6, wherein the first object and the second object are recognized as a same object within the plurality of frames by a user.

8. The apparatus according to claim 6, further comprising a user interface (UI) generator which generates a third UI which shows the difference in the depth information between the depth information of the first object and the depth information of the second object, calculated by the depth information difference calculator,
wherein the third UI comprises a fourth UI which sets up a depth information adjusting range with regard to the second object.

9. The apparatus according to claim 8, further comprising:
a display unit; and
a user input unit,
wherein the depth information adjuster adjusts the depth information of the second object according to a certain depth information adjusting range based on a user selection input through the fourth UI.

10. A depth information adjusting method of a three-dimensional (3D) image conversion apparatus, the method comprising:
generating depth information with regard to an input image;
detecting an object having the depth information exceeding a preset range;
adjusting the depth information of the object to be within the preset range; and
rendering the input image according to the adjusted depth information.

11. The method according to claim 10,
wherein the detecting the object comprises detecting an object having parallax exceeding a preset range in a left-eye image and a right-eye image corresponding to the input image based on the generated depth information; and
wherein the adjusting the depth information comprises adjusting the parallax of the detected object to be within the preset range.

12. The method according to claim 11, further comprising:
generating and displaying a first user interface (UI) which indicates the detected object and a second user interface (UI) which sets up a parallax adjusting range of the detected object; and
receiving a certain parallax adjusting range based on a user selection through the second UI,
wherein the adjusting the depth information comprises adjusting the parallax of the object according to the received certain parallax adjusting range.

13. The method according to claim 12,
wherein the adjusting the depth information comprises adjusting the generated depth information within a predetermined range based on metadata about the input image,
wherein the metadata comprises at least one of genre information and viewing age information of contents corresponding to the input image.

14. The method according to claim 10, further comprising calculating a difference in depth information between depth information of a first object in a first frame and depth information of a second object in a second frame among a plurality of frames of the input image based on the generated depth information,
wherein the adjusting the depth information comprises adjusting the depth information of the second object to be within a preset range, if the difference in depth information exceeds a preset critical value.

15. The method according to claim 14, further comprising:
generating and displaying a third user interface (UI) which shows the difference in the depth information between the depth information of the first object and the depth information of the second object, and a fourth UI which sets up a depth information adjusting range with regard to the second object, and
receiving a certain depth information adjusting range based on a user selection through the fourth UI,
wherein the adjusting the depth information adjusts the depth information of the second object according to the received certain depth information adjusting range.
